# EUROPEAN PATENT APPLICATION

(11) **EP 2 453 501 A1**
(43) Date of publication of application: **16.05.2012**
(21) Application number: 11189259.2
(22) Date of filing: 15.11.2011
(51) Int. Cl.: H01M 2/06, H01M 2/30, H01M 10/04, H01M 2/04

(54) **Secondary battery with improved coupling between the collector and the cap plate**

(30) Priority: 15.11.2010 US 413589 P; 12.10.2011 US 271508
(71) Applicant: SB LiMotive Co., Ltd., Yongin-si Gyeonggi-do (KR)
(72) Inventor: Kim, Dukjung, Gyeonggi-do (KR)
(74) Representative: Mounteney, Simon James

(57) **Abstract**

Provided is a secondary battery that improves the coupling force between a collector and a cap plate to reduce a electrolyte leakage. The secondary battery includes a case, an electrode assembly inserted in the case, an electrode terminal of a collector connected to a non-coating portion of the electrode assembly, a gasket disposed on the upper portion of the electrode terminal, and a cap plate including a protrusion disposed on a lower surface and passing through the gasket and extending down to the collector.

## Description

The present invention relates to a second battery.

### [BACKGROUND ART]

Secondary batteries, unlike primary batteries, are rechargeable. They may be used in high-tech small electronic devices such as cellular phones, notebook computers, and camcorders, or be used as high capacity power sources for driving motors of electric vehicles or hybrid vehicles.

Such a secondary battery typically includes an electrode assembly within a case, and electrode terminals connected to the electrode assembly and protruding to the upper side of a cap plate. The secondary battery is required to prevent a leakage of electrolyte out of the case to ensure the reliability thereof. Thus, it is necessary to secure the strength of a secondary battery.

The present invention sets out to provide a secondary battery that improves the coupling force between a collector and a cap plate to prevent a electrolyte leakage.

Accordingly the invention provides a secondary battery as set out in Claim 1. Preferred features of the invention are set out in Claims 2 to 14.

A secondary battery according to the invention thereby offers a secure connection between the cap plate and the collector, thereby improving the mechanical strength thereof.
FIG. 1 is an exploded perspective view illustrating a secondary battery according to an embodiment of the invention;
FIG. 2 is a cross-sectional view of the secondary battery of FIG. 1;
FIG. 3 is an enlarged view illustrating a region A of FIG. 2;
FIG.s 4a and 4b are perspective views illustrating the collector, electrode terminal, gasket and cap plate of the secondary battery of FIG.s 1 to 3.
FIG. 5 is a cross-sectional view illustrating a secondary battery according to another embodiment of the invention;
FIG. 6 is a flowchart illustrating a method of fabricating a secondary battery according to the invention; and
FIGS. 7A through 7F are schematic views illustrating a method of fabricating a secondary battery according to the invention.

Embodiments of the invention will now be described more fully hereinafter with reference to the accompanying drawings; however, the invention may be embodied in different forms and should not be construed as limited to the embodiments set forth herein. Rather, these embodiments are provided so that this disclosure will be thorough and clearly convey the scope of the invention to those skilled in the art.

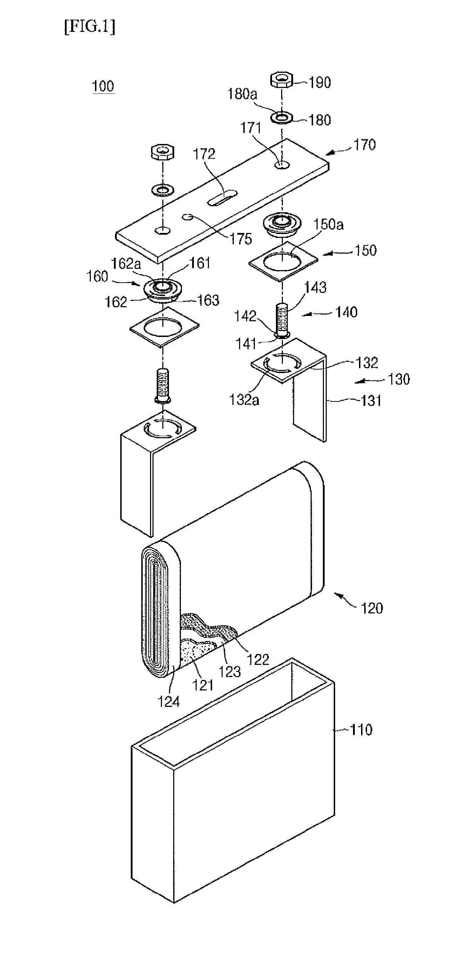

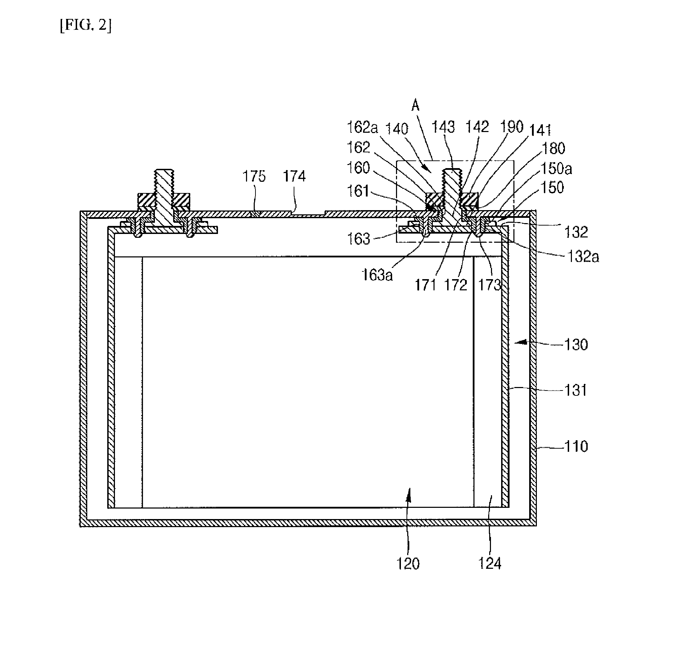

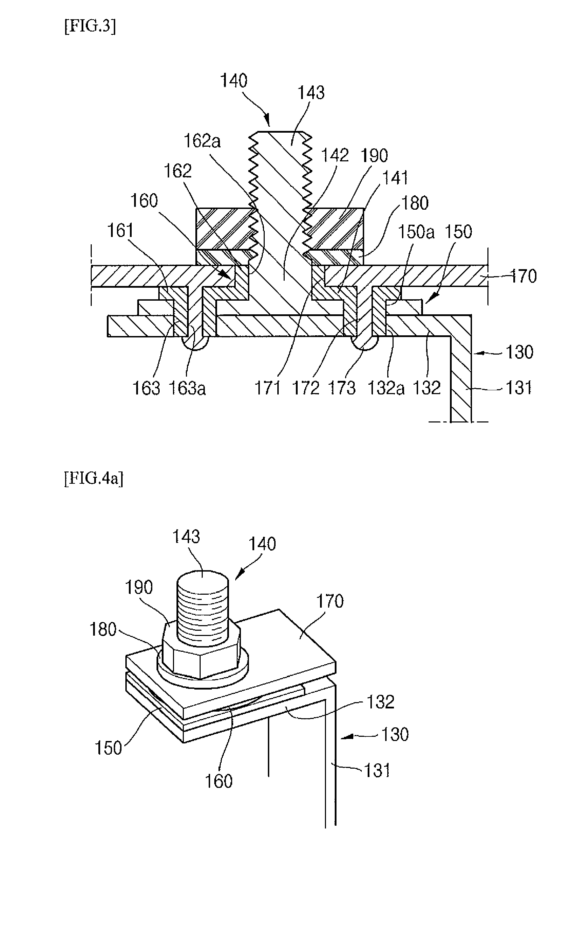

FIG. 1 is an exploded perspective view illustrating a secondary battery according to an embodiment of the invention. FIG. 2 is a cross-sectional view of the battery of FIG. 1. FIG. 3 is an enlarged view illustrating a region A of FIG. 2. FIG.s 4a and 4b are perspective views illustrating the collector, electrode terminal, gasket and cap plate of the secondary battery of this embodiment

Referring to FIGS. 1 through 4b, the secondary battery 100 includes a case 110, an electrode assembly 120, collectors 130, electrode terminals 140, insulators 150, gaskets 160, a cap plate 170, and nuts 190. Washers 180 disposed between the cap plate 170 and the nuts 190.

The case 110 is formed of a conductive metal such as aluminum, aluminum alloy, or steel plated with nickel, and has an approximately hexahedron shape provided with an opening through which the electrode assembly 120 and the collectors 130 are inserted and placed. The opening is open toward the upper side of the case 110.

The electrode assembly 120 is formed by winding or stacking a first electrode plate 121, a second electrode plate 122, and a separator 123 disposed between the first and second electrode plates 121 and 122, which have thin plate or film shape. In this particular embodiment, the first electrode plate 121 functions as a positive electrode, and the second electrode plate 121 functions as a negative electrode. In this case, the first electrode plate 121 is formed by applying a first electrode active material such as a transition metal oxide on a first electrode collector formed of metal foil such as aluminum foil, and the second electrode plate 122 is formed by applying a second electrode active material such as graphite or carbon on a second electrode collector formed of metal foil such as nickel or copper foil. The first and second electrode plates 121 and 122 may have opposite polarities in other embodiments.

The separator 123 is disposed between the first electrode plate 121 and the second electrode plate 122 to prevent a short circuit and allow the movement of lithium ions. The separator 123 may be formed of polyethylene, polypropylene, or combination film of polyethylene and polypropylene. However, the material of the separator 123 is not limited thereto.

The first and second electrode plates 121 and 122 include a pair of non-coating portions 124 that are disposed at regions out of the first and second electrode active materials. The non-coating portions 124 formed on the first and second electrode plates 121 and 122 are respectively connected to the collectors 130 to form current paths.

The collectors 130 are connected to the non-coating portions 124, respectively. Each collector 130 includes a first region 131 connected to a respective one of the non-coating portions 124, and a second region 132 bent from the first region 131.

The first region 131 extends in a first direction that is substantially parallel to a side-surface of the non-coating portion 124 to which it is attached. The first region 131 is pressed and coupled to the side surface of the non-coating portion 124. The first region 131 may be coupled to the non-coating portion 124 through welding.

The second region 132 extends from the first region 131. The second region 132 extends in a second direction that is approximately perpendicular to the first direction. An opening in the form of a slit member 132a is disposed in the second region 132 in the first direction. In this example, the slit member 132a includes two arc-shaped symmetric slits. Each gasket 160 passes through a respective slit member 132a, so that the second region 132 can be coupled to the gasket 160.

Each electrode terminal 140 is coupled to the upper portion of a respective one of the collectors 130. The electrode terminal 140 is coupled in a first direction to the upper surface of the second region 132 of the collector 130. That is, the electrode terminal 140 is approximately perpendicular to the second region 132. The electrode terminal 140 is a separate structure from the collector 130, but the electrode terminal 140 may be integrally formed with the collector 130, or be coupled to the collector 130 through welding.

Each electrode terminal 140 includes a first region 141 contacting the second region 132 of the collector 130, a second region 142 connected to the first region 141, and a third region 143 contacting the second region 142 and protruding to the upper side of the cap plate 170.

The first region 141 is disposed on the upper portion of the second region 132 of the collector 130. The first region 141 is coupled to the second region 132 of the collector 130 and is disposed between the slit members 132a. Because the first region 141 contacts the second region 132 of the collector 130, the electrode 140 is electrically and mechanically connected to the second region 132. In addition, the gasket 160 and the cap plate 170 in each case press the upper portion of the first region 141 so as to be mechanically coupled to the collector 130. Thus, the first region 141 is disposed between the collector 130 and the cap plate 170 to fix the electrode terminal 140.

The second region 142 protrudes in the first direction that is approximately perpendicular to the first region 141. The second region 142 connects the first region 141 to the third region 143 to form a current path, and supports the third region 143 that protrudes to the upper side of the cap plate 170. The second region 142 has a height approximately corresponding to the sum of the thickness of the gasket 160 and the thickness of the cap plate 170. The second region 142 has a smaller cross-section than that of the first region 141. Thus, when the cap plate 170 is coupled to the upper portion of the second region 142 in the first direction, the cap plate 170 may press the first region 141. Thus, the electrode terminal 140 can be securely coupled to the collector 130 by coupling force of the cap plate 170.

The third region 143 protrudes in the first direction that is approximately perpendicular to the second region 142. The third region 143 protrudes to the upper side of the cap plate 170, and has a thread thereon. The third region 143 is coupled with the washer 180 and the nut 190 is coupled to the thread so as to press the cap plate 170 between the first region 141 and the nut 190, thereby providing a high coupling force.

The insulator 150 is disposed on the upper portion of the collector 130. The insulator 150 has a circular hole 150a that surrounds the first region 141 of the electrode terminal 140. The insulator 150 improves the sealing performance of the gasket 160, and prevents the collector 130 from contacting the cap plate 170, thereby electrically insulating the cap plate 170 from the collector 130.

The gasket 160 is coupled to the electrode terminal 140 and the insulator 150 in the first direction from the upper side thereof. The gasket 160 is also coupled to the first region 141 of the electrode terminal 140, and presses the first region 141. In addition, the gasket 160 is coupled to the cap plate 170 from the lower side thereof in order to seal the cap plate 170. Thus, the gasket 160 prevents the leakage of the electrolyte from the case 110.

The cap plate 170 passes through the gasket 160, and the gasket 160 prevents the cap plate 170 from contacting the collector 130 and the electrode terminal 140 to electrically insulate the cap plate 170 therefrom.

The gasket 160 includes a first region 161 disposed on the upper portion of the first region 141 of the electrode terminal 140, a second region 162 protruding upward from the first region 161 and coupling to the cap plate 170, and a third region 163 protruding downward from the first region 161 and coupling to the collector 130.

The first region 161 presses the first region 141 of the electrode terminal 140 from the upper side thereof. The first region 161 also extends out to a portion of the top surface of the insulator 150 to press the insulator 150 from the upper side thereof. Thus, the first region 161 fills the gap between the insulator 150 and the cap plate 170 to prevent the leakage of the electrolyte. The first region 161 also electrically insulates the electrode terminal 140 from the cap plate 170.

The second region 162 protrudes upward from the first region 161. The second region 162 passes through the cap plate 170. The second region 162 has an upper through hole 162a through which the second region 142 of the electrode terminal 140 protrudes. The second region 162 together with the first region 161 electrically insulates the electrode terminal 140 from the cap plate 170.

The third region 163 protrudes downward from the first region 161. The third region 163 passes between the insulator 150 and the first region 141 of the electrode terminal 140, and protrudes out of the lower portion of the second region 132 of the collector 130. The second region 162 has a lower through hole 163a. A bridge portion (172) of the cap plate 170 passes through the lower through hole 163a and protrudes from the lower portion of the collector 130. Accordingly, the cap plate 170 is mechanically connected to the collector 130 to improve coupling force for the electrode terminal 140.

The cap plate 170 is disposed on the upper side of the case 110 to seal the case 110. The cap plate 170 may be welded to the edge of the opening part of the case 110 to seal the case 110.

The cap plate 170 has terminal holes 171 in the regions where the electrode terminals 140 are disposed. The inner wall of the terminal hole 171 surrounds the second region 162 of the gasket 160, and the electrode terminal 140 protrudes through the upper through hole 162a of the second region 162. Thus, the cap plate 170 is electrically insulated from the electrode terminal 140.

In this embodiment, the bridge portions 172 take the form of protrusions 172 protruding downward from the edges of the terminal holes 171. The cap plate 170 is coupled through the protrusions 172 to the collectors 130. In this case, the protrusion 172 passes through the lower through hole 163a of the third region 163 of the gasket 160. Thus, the third region 163 of the gasket 160 surrounds a side portion of the protrusion 172 to insulate the protrusion 172 from the collector 130. As a result, the cap plate 170 is mechanically connected to the collector 130 through the protrusion 172, and is electrically insulated from the collector 130.

The cap plate 170 includes formations 173 on the lower surfaces of the protrusions 172. Each formation takes the form of a rivet part 173 located in a distal region of the protrusion 172. The rivet part 173 is located at the end of the third region 163 of the gasket 160. The rivet part 173 fixes the gasket 160 to prevent the protrusion 172 from being removed from the gasket 160. In this case, the rivet part 173 contacts only the third region 163 of the gasket 160 without contacting the second region 132 of the collector 130, so that the cap plate 170 can be electrically insulated from the collector 130.

A safety vent 174 and an electrolyte injection plug 175 are provided to the upper surface of the cap plate 170. Since the safety vent 174 is thinner than the other parts of the cap plate 170, when the inner pressure of the case 110 increases, the safety vent 174 is opened first to secure the safety of the secondary battery 100. The electrolyte injection plug 175 seals an injection hole after injecting the electrolyte into the case 110.

The washer 180 is disposed on the upper portion of the cap plate 170, and is coupled with the electrode terminal 140. The washer 180 is disposed on the third region 143 of the electrode terminal 140 to prevent the nut 190 from being released from the electrode terminal 140. When the cap plate 170 is electrically insulated from the electrode terminal 140, the washer 180 may be formed of an insulating material.

The nut 190 is coupled in the first direction from the upper side of the electrode terminal 140. The nut 190 has a thread on the inner surface thereof, which engages with the thread formed on the outer surface of the third region 143 of the electrode terminal 140. The coupling force between the nut 190 and the electrode terminal 140 securely couples the electrode terminal 140 and the collector 130 to the cap plate 170.

Accordingly, the secondary battery 100 includes the protrusion 172 on the lower surface of the cap plate 170 to couple the protrusion 172 to the collector 130, so that the cap plate 170 can be securely coupled to the collector 130. The secondary battery 100 includes the rivet part 173 in the distal region of the protrusion 172 to improve the coupling force of the protrusion 172. In addition, the secondary battery 100 includes the gasket 160 between the collector 130 and the protrusion 172 of the cap plate 170, so that the collector 130 is electrically insulated from the protrusion 172 of the cap plate 170.

Hereinafter, a second battery according to another embodiment of the invention will now be described.

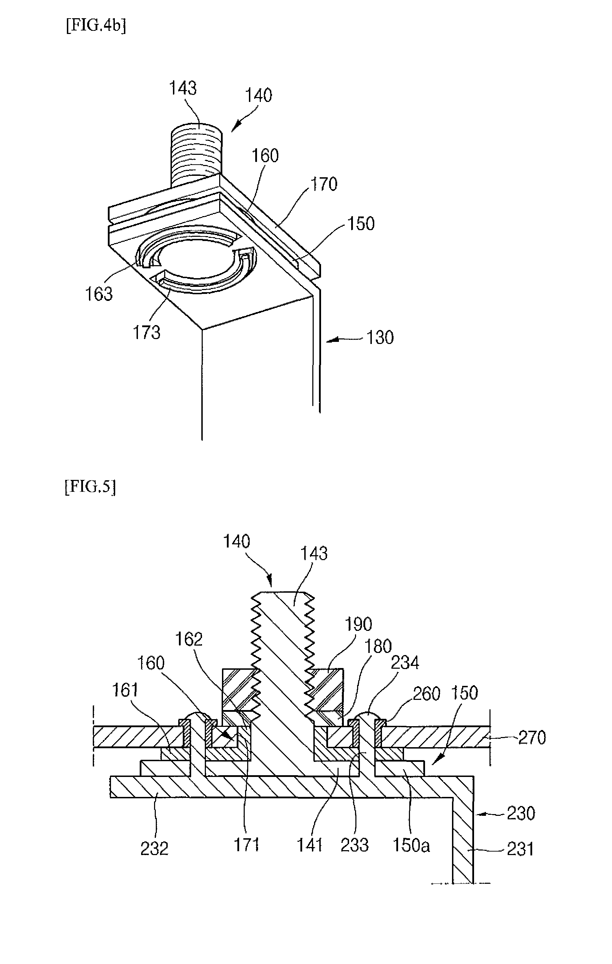

Referring to FIG. 5, a second battery according to this embodiment of the invention includes a case, an electrode assembly, collectors 230, electrode terminals 140, insulators 150, gaskets 160, 260, a cap plate 270, washer 180 and nuts 190.

The collector 230 includes first region 231, second region 232, bridge portion 233 and a formation 234 in a distal region of the bridge portion. The first region 231 and second region 232 are substantially the same as first region 131 and second region 132 of the previous embodiment. The bridge portion 233 takes the form of a protrusion 233 that protrudes from the upper surface of the second region 232, and penetrates the cap plate 270. This protrusion 233 is coupled with the cap plate 270 by formation 234. The formation 234 takes the form of a rivet and it is provided by riveting the end portion of the protrusion 233.

Each gasket 160, 260 is a composite structure that includes a first gasket portion 160 and second gasket portion 260. The first gasket portion 160 is broadly similar to the gasket 160 of the previous embodiment, except it is penetrated by protrusion 233 of the collector 230 and it has no portion penetrating the collector 230. Each second gasket portion 260 is provided between a respective one of the protrusions 233 and the cap plate 270 and between a respective rivet 234 and cap plate 270. The second gasket 260 insulates the collector 230 and cap plate 270 each other. Thus, the cap plate 270 can be electrically independent from the collector 230.

The cap plate 270 has two holes, each of which is penetrated by a respective second gasket 260 and third protrusion 233. The cap plate 270 is therefore coupled with the collectors 230 by the rivets 234 of the collectors 230. The rivets portion 234 each overlap a respecive part of the upper surface of the cap plate 270, thus couple the cap plate 270 and collectors 230 physically.

Hereinafter, a method of fabricating a secondary battery according to the invention will now be described.

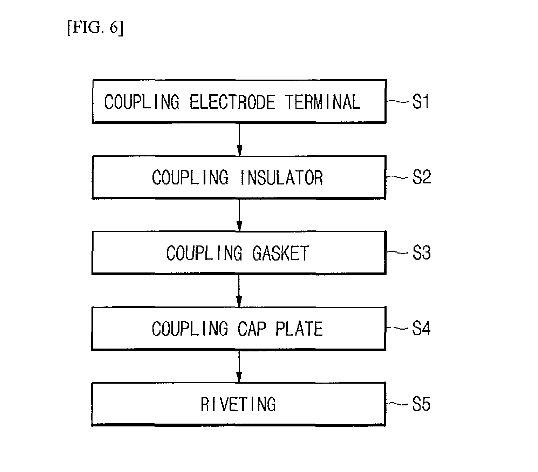

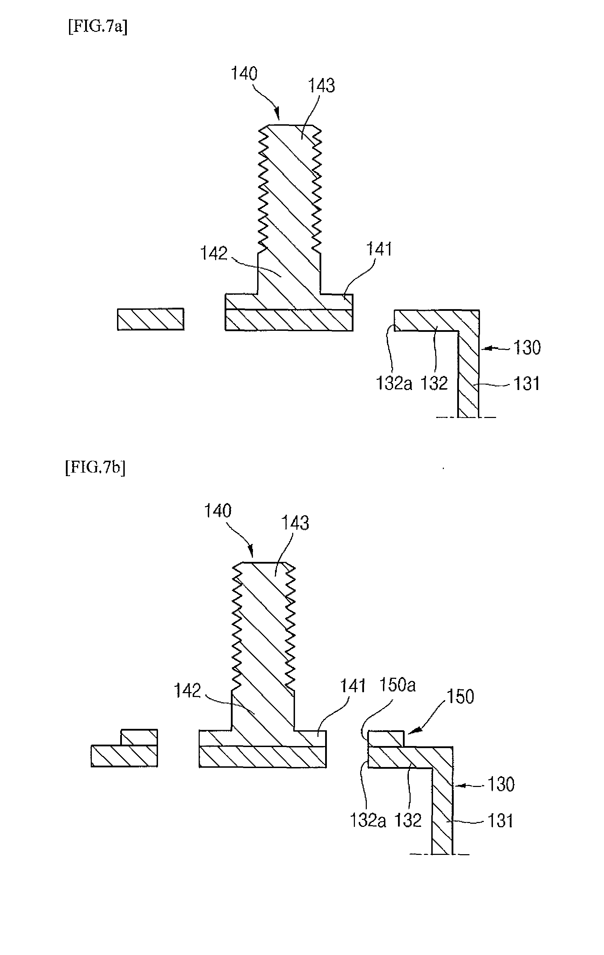

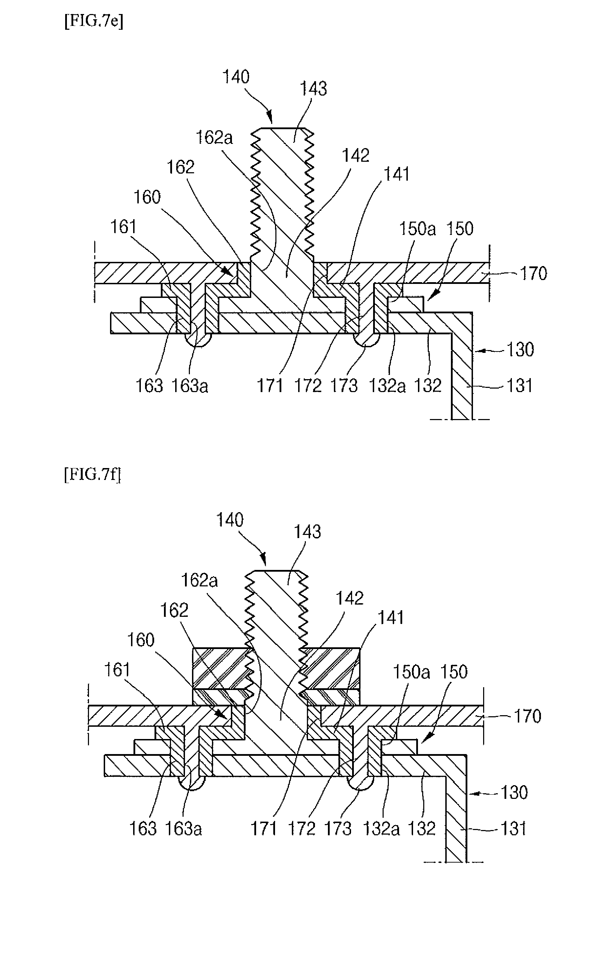

FIG. 6 is a flowchart illustrating a method of fabricating a secondary battery according to an embodiment of the invention. FIGS. 7A through 7F are schematic views illustrating the method.

Referring to FIG. 6, the method includes an electrode terminal coupling operation S1, an insulator coupling operation S2, a gasket coupling operation S3, and a cap plate coupling operation S4. The method of fabricating the secondary battery 100 may further include a riveting operation S5 after the cap plate coupling operation S4. Hereinafter, each operation of FIG. 6 will be described with reference FIG. 7A to FIG. 7F.

Referring to FIGS. 6 and 7A, in the electrode terminal coupling operation S1, the electrode terminal 140 is coupled to the collector 130. The electrode terminal 140 is formed on the second region 132 of the collector 130. The electrode terminal 140 may be welded to the second region 132 to improve the coupling force, or be integrally formed with the collector 130.

Referring to FIGS. 6 and 7B, in the insulator coupling operation S2, the insulator 150 is coupled to the upper portion of the collector 130. The insulator 150 is disposed on the outer circumferential surface of the electrode terminal 140. Since the insulator 150 has the circular hole 150a, the insulator 150 can be disposed on the outer circumferential surface of the electrode terminal 140.

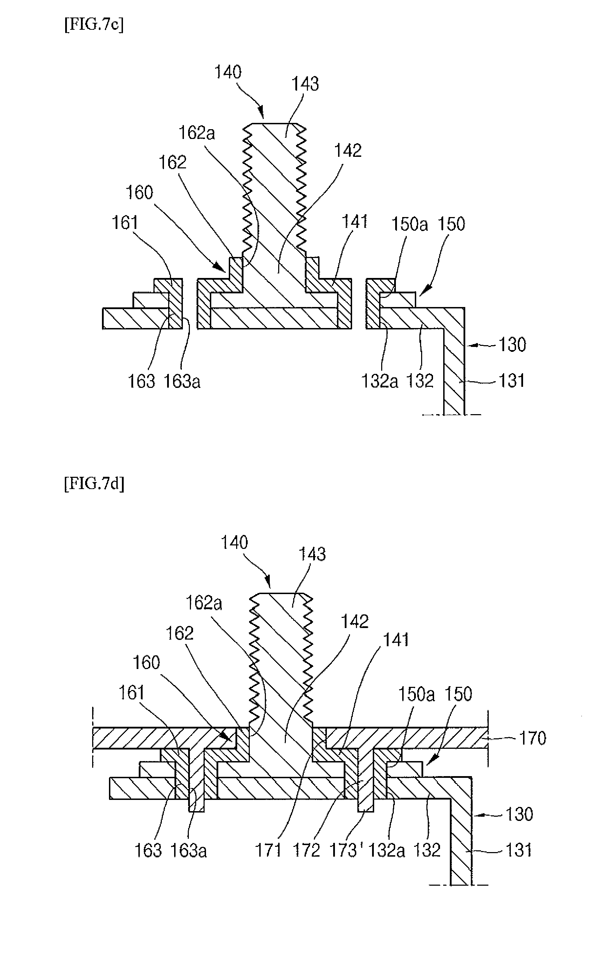

Referring to FIGS. 6 and 7C, in the gasket coupling operation S3, the gasket 160 is coupled to the electrode terminal 140 and the insulator 150 in the first direction from the upper side of the electrode terminal 140 and the insulator 150. At this point, the electrode terminal 140 passes through the upper through hole 162a of the second region 162. The third region 163 of the gasket 160 passes through the slit member 132a formed in the second region 132 of the collector 130. The gasket 160 is coupled to the electrode terminal 140 and the insulator 150 to press the electrode terminal 140 and the insulator 150 to the collector 130.

Referring to FIGS. 6 and 7d, in the cap plate coupling operation S4, the cap plate 170 is coupled to the gasket 160 in the first direction from the upper side of the gasket 160. The second region 162 of the gasket 160 passes through the terminal hole 171 to couple to the cap plate 170. The cap plate 170 contacts the first region 161 of the gasket 160. At this point, a lower part 172' of the protrusion 172 of the cap plate 170 passes through the lower through hole 163a of the gasket 160 and protrudes out of the lower portion of the collector 130.

Referring to FIGS. 6 and 7E, in the riveting operation S5, the lower part 172' of the protrusion 172 is riveted from the lower surface thereof. The lower part 172' of the protrusion 172 is riveted to form the rivet part 173. The rivet part 173 securely couples the cap plate 170 to the gasket 160.

Embodiments of the invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A secondary battery (100), comprising:
a case (110);
an electrode assembly (120) located within the case (110);
a cap plate (170) fitted to the case (110) and comprising a terminal hole (171);
a collector (130) that is electrically connected to the electrode assembly (120);
and
an electrode terminal (140) that is electrically connected to the collector (130) and projects through the terminal hole (171) to the exterior of the cap plate (170);
**characterised in that** one of the cap plate (170) and the collector (130) comprises a bridge portion (172) that extends between the cap plate (170) and the collector (130) to form a physical connection between the cap plate (170) and the collector (130).

2. A secondary battery according to Claim 1, comprising a gasket (160) located between a first surface of the collector (130) and an inner surface of the cap plate (170); wherein the bridge portion (172) passes through the gasket (160).

3. A secondary battery according to Claim 1 or 2, wherein the bridge portion (172) is integrally formed with one of the cap plate (170) and the collector (130).

4. A secondary battery according to Claim 3 when dependent upon Claim 2, wherein the other of the collector (130) and the cap plate (170) comprises an opening (132a), a portion of the gasket (160) is located within the opening (132a) and the bridge portion (172) extends into the opening (132a) via a hole (163a) in the gasket (160).

5. A secondary battery according to Claim 4, wherein the said gasket (160) covers a surface of the bridge portion (172) that faces away from the electrode terminal (140).

6. A secondary battery according to Claim 4 or 5, wherein the said gasket (160) covers a surface of the bridge portion (172) that faces towards the electrode terminal (140).

7. A secondary battery according to Claim 4, 5 or 6, wherein the bridge portion (172) comprises a formation (173) in a distal region thereof for resisting the removal of the bridge portion (172) from the opening (132a).

8. A secondary battery according to Claim 4, 5 or 6, wherein the bridge portion (172) comprises a formation (173) in a distal region thereof, wherein the formation (173) is a rivet formation.

9. A secondary battery according to Claim 7 or 8, wherein the formation (173) is spaced from the collector (130) by the gasket (160).

10. A secondary battery according to any preceding claim, wherein the bridge portion (172) at least partially surrounds the electrode terminal (140).

11. A secondary battery according to Claim 9 or 10, wherein the bridge portion (172) comprises a plurality of protrusions (172).

12. A secondary battery according to Claim 11, wherein each of the protrusions (172) has an arcuate cross section.

13. A secondary battery according to Claim 12, wherein the opening (132a) comprises a plurality of arcuate slits (132a), the said slits (132a) corresponding in shape and number to the protrusions (172).

14. A secondary battery according to any preceding claim, wherein a first portion (141) of the electrode terminal (140) is seated upon the collector (130).

15. A secondary battery according to Claim 2 or any claim dependent upon Claim 2, wherein the gasket comprises two discrete gasket portions.
